# EUROPÄISCHE PATENTSCHRIFT

(11) **EP 2 874 948 B1**
(45) Veröffentlichungstag und Bekanntmachung des Hinweises auf die Patenterteilung: **03.05.2017**
(21) Anmeldenummer: 13739428.4
(22) Anmeldetag: 19.07.2013
(51) Int. Cl.: C02F 1/00, C02F 1/68

(54) **DOSIERANLAGE MIT STEUERUNG ZUR BEHANDLUNG VON WASSER UND VERFAHREN ZU DEREN BETRIEB**
CONTROLLED METERING SYSTEM FOR HANDLING WATER AND METHOD FOR OPERATING SAID METERING SYSTEM
INSTALLATION DE DOSAGE AVEC COMMANDE POUR LE TRAITEMENT DE L'EAU ET PROCÉDÉ SERVANT À FAIRE FONCTIONNER LADITE INSTALLATION

(30) Priorität: 23.07.2012 DE 102012212865
(43) Veröffentlichungstag der Anmeldung: 27.05.2015
(73) Patentinhaber: Judo Wasseraufbereitung GmbH, 71364 Winnenden (DE)
(72) Erfinder: DOPSLAFF, Carsten, H., 71364 Winnenden (DE); DOPSLAFF, Hartmut, 71364 Winnenden (DE); SÖCKNICK, Ralf, 70806 Kornwestheim (DE); HAUG, Alexander, 71686 Remseck (DE)
(74) Vertreter: Kohler Schmid Möbus Patentanwälte
(86) Internationale Anmeldenummer: PCT/EP2013/065302
(87) Internationale Veröffentlichungsnummer: WO 2014/016216

(56) Entgegenhaltungen:
- EP-A1- 2 502 541
- DE-B3-102008 045 354
- US-A1- 2001 045 380
- US-A1- 2008 023 409

## Beschreibung

Die Erfindung betrifft eine Dosieranlage, umfassend
- einen Zulauf für zu behandelndes Wasser,
- einen Behälter oder Ablauf für behandeltes Wasser,
- wenigstens einen Vorratsbehälter mit Wasserkonditionierungsmittel,
- wenigstens eine Dosierpumpe zum Zudosieren von Wasserkonditionierungsmittel aus dem wenigstens einen Vorratsbehälter in das zu behandelnde Wasser.

In Haushalt und Industrie sind vielfach Wässer mit bestimmten Eigenschaften erforderlich oder erwünscht, wobei diese Eigenschaften durch einen Zusatz von Wasserkonditionierungsmittel erreicht werden. Beispielsweise kann hartem Wasser ein Härtestabilisierungsmittel zugefügt werden, um Kalkablagerungen in nachfolgenden Wasserinstallationen zu vermindern.

Wasserkonditionierungsmittel werden typischerweise mittels einer Dosierpumpe zu einem zu behandelnden Wasser zugesetzt; die Menge des zugesetzten Konditionierungsmittels wird typischerweise abhängig von der zu behandelnden Wassermenge gewählt.

Die EP 2 248 769 A2 offenbart ein Verfahren zur Reinigung von Abwasser mittels einer Dosierung von Chemikalien, insbesondere Fällungsmitteln. Mit Hilfe von Informationen über das zugeführte Rohwasser, das zu behandelnde Abwasser und/oder das gereinigte Abwasser wird die Menge der zu dosierenden Chemikalien berechnet. Als Informationen dienen der mit einem Wasserzähler ermittelte Wasserverbrauch und gegebenenfalls die Temperatur, der pH-Wert, der Druck und Informationen über das Abwasserreinigungsresultat. Genaue Details zur Steuerung der Dosierung sind nicht offenbart.

In der nachveröffentlichten deutschen Patentanmeldung 10 2011 006 176 wurde vorgeschlagen, eine Dosieranlage abhängig von den Leitfähigkeiten des unbehandelten Wassers und des behandelten Wassers zu steuern. Die Leitfähigkeit des unbehandelten Wassers legt dabei einen Sollwert für die Differenz der Leitfähigkeiten des behandelten und des unbehandelten Wassers fest. Die Differenz wird über die Zudosierung eines Wasserkonditionierungsmittels auf den Sollwert eingeregelt. Dadurch kann die Dosierleistung an eine veränderliche Wasserqualität angepasst werden.

Die gemessenen Werte für die Leitfähigkeiten des unbehandelten Wassers und des behandelten Wassers unterliegen jedoch messtechnisch bedingt ständigen leichten Schwankungen, wodurch ein ständiges Nachregeln der Dosierleistung der Dosieranlage bewirkt wird. Dies führt zu einem hohen Verschleiß bei den Regelorgangen der Dosieranlage. Nachteilig ist auch, dass dieses Vorgehen in der Regel zwei Leitfähigkeitssensoren erfordert.

Die US 2008/0023409 A1 beschreibt eine Apparatur und ein Verfahren zur Wasserkonditionierung. Von einem System, in dem Wasser zirkuliert, wird ein Seitenstrom abgezweigt. Der Seitenstrom wird mit Sensoren untersucht, und eine Kontrolleinrichtung, an die die Sensoren angeschlossen ist, schaltet die Zugabe von Konditionierungsmittel und Pufferlösung zu und ab. Für den pH-Wert im Seitenstrom ist ein akzeptabler Bereich festgelegt.

### Aufgabe der Erfindung

Es ist die Aufgabe der vorliegenden Erfindung, eine Dosieranlage vorzustellen, bei der auf einfache Weise die Dosierleistung an eine schwankende Qualität des zu behandelnden Wassers angepasst werden kann, wobei Nachregelvorgänge reduziert sind.

### Kurze Beschreibung der Erfindung

Diese Aufgabe wird gelöst durch eine Dosieranlage, umfassend
- einen Zulauf für zufließendes, zu behandelndes Wasser,
- einen Sensor für die Erfassung eines Wasserparameters im Zulauf,
- einen Ablauf für abfließendes, behandeltes Wasser,
- wenigstens einen Vorratsbehälter mit Wasserkonditionierungsmittel,
- wenigstens eine Dosierpumpe zum Zudosieren von Wasserkonditionierungsmittel aus dem wenigstens einen Vorratsbehälter in das zu behandelnde Wasser zwischen Zulauf und Ablauf,
- eine elektronische Steuereinrichtung zum Steuern der Zudosierung von Wasserkonditionierungsmittel zum zu behandelnden Wasser in Abhängigkeit von dem mit dem Sensor gemessenen Wasserparameter des zu behandelnden Wassers, wobei
   a) in einem Speicher der elektronischen Steuereinrichtung wenigstens drei aneinander anschließende Parameterintervalle möglicher Werte des Wasserparameters des zu behandelnden Wassers programmiert sind,
   b) in einem Speicher der elektronischen Steuereinrichtung wenigstens drei Betriebsmodi programmiert sind, wobei verschiedene Betriebsmodi verschiedene Zudosierungen von Wasserkonditionierungsmittel zum zu behandelnden Wasser vorsehen,
   c) die elektronische Steuereinrichtung dazu ausgebildet ist, eine Messung des Wasserparameters des zu behandelnden Wassers vorzunehmen, eine Zuordnung des gemessenen Werts des Wasserparameters des zu behandelnden Wassers zu einem der Parameterintervalle vorzunehmen, und eine Zuordnung eines Betriebsmodus in Abhängigkeit vom zugeordneten Parameterintervall vorzunehmen, wobei für die wenigstens drei Parameterintervalle unterschiedliche Zudosierungen von Wasserkonditionierungsmittel vorgesehen sind;
   d) die elektronische Steuereinrichtung dazu ausgebildet ist, die Dosieranlage gemäß dem zugeordneten Betriebsmodus zu betreiben, wobei gemäß der Programmierung des Speichers der elektronischen Steuereinrichtung in wenigstens zwei Betriebsmodi die Zudosierung einer unterschiedlichen Menge eines identischen Wasserkonditionierungsmittels je Menge des zu behandelnden Wassers vorgesehen ist, so dass in den wenigstens zwei Betriebsmodi eine unterschiedliche Konzentration des identischen Wasserkonditionierungsmittels im behandelten Wasser erhalten wird.

Im Rahmen der Erfindung wird die Qualität des zu behandelnden Wassers über (mindestens) einen Sensor überwacht, wobei dieser Sensor typischerweise in das zu behandelnde Wasser hineinragt bzw. von diesem umspült wird. Die Wasserqualität wird dann mittels der programmierten (vordefinierten) Parameterintervalle kategorisiert. Abhängig vom auf den Messwert des Sensors zutreffenden Parameterintervall (oder der vordefinierten Qualitätskategorie) wird dann ein Betriebsmodus festgelegt. Der Betriebsmodus bestimmt insbesondere über die Zudosierung von Wasserkonditionierungsmittel zum zu behandelnden Wasser, in der Regel in Gestalt einer gewünschten Konzentration von Wasserkonditionierungsmittel im behandelten Wasser.

Der Betriebsmodus bzw. die Zudosierung ist nicht vom genauen Wert des Wasserparameters (der typischerweise merklich schwankt), sondern nur von dessen Zugehörigkeit zu einem der Parameterintervalle abhängig. Die Häufigkeit von Nachregelprozessen kann dann durch die Größe der Parameterintervalle kontrolliert werden. Größere Intervalle führen grundsätzlich zu weniger Nachregelprozessen, und kleinere Intervalle führen grundsätzlich zu mehr Nachregelprozessen. Durch eine Wahl der Intervallgröße deutlich breiter als die typische Schwankungsbreite der Sensormesswerte bei unveränderter Wasserqualität kann die Häufigkeit von Nachregelprozessen wirkungsvoll begrenzt werden. Typischerweise ist die Intervallgröße von einem oder mehreren, bevorzugt allen Parameterintervallen, wenigstens fünfmal, bevorzugt wenigstens zehnmal, besonders bevorzugt wenigstens fünfzigmal so groß wie die Standardabweichung des Sensormesswerts zu seinem Mittelwert bei unveränderter Wasserqualität.

Eine Änderung des Betriebsmodus und damit eine Nachregelung der Dosierleistung wird durch den Wasserparameter nur bei einer größeren Änderung ausgelöst, durch die der Wert des Wasserparameters in ein anderes Parameterintervall als zuvor fällt. Dadurch kann Verschleiß an den Regelorgangen der Dosieranlage reduziert werden.

Im Rahmen der Erfindung werden wenigstens drei, besonders bevorzugt genau drei oder vier, aufeinanderfolgende Parameterintervalle für den Wasserparameter mit unterschiedlichen Zudosierungen von Wasserkonditionierungsmittel eingerichtet. Bevorzugt werden jedoch nicht mehr als einhundert, besonders bevorzugt nicht mehr als zehn, ganz besonders bevorzugt nicht mehr als sechs aufeinanderfolgende Parameterintervalle für den Wasserparameter eingerichtet. Entsprechendes gilt für etwaige weitere Wasserparameter und deren weitere Parameterintervalle.

Bei der erfindungsgemäßen Dosieranlage ist gemäß der Programmierung des Speichers der elektronischen Steuereinrichtung in wenigstens zwei Betriebsmodi die Zudosierung einer unterschiedlichen Menge eines identischen Wasserkonditionierungsmittels je Menge des zu behandelnden Wasser vorgesehen, so dass in den wenigstens zwei Betriebsmodi eine unterschiedliche Konzentration des identischen Wasserkonditionierungsmittels im behandelten Wasser erhalten wird. Die Menge bzw. Konzentration desselben Wasserkonditionierungsmittels kann so direkt an die Wasserqualität angepasst werden. Wenn aufgrund des Werts des Wasserparameters bzw. des zugehörigen Parameterintervalls mehr oder weniger Bedarf für das Wasserkonditionierungsmittel erkannt wird, wird entsprechend mehr oder weniger zugesetzt.

Ein Wasserkonditionierungsmittel enthält gemäß der Erfindung eine oder mehrere chemische Substanzen zur Wasserbehandlung. Typische chemische Substanzen zur Wasserbehandlung sind hierbei Härtestabilisatoren (etwa poly-Phosphate), Korrosionsschutzmittel (etwa Silikate oder ortho-Phosphate), Fällungsmittel (etwa FeSO₄ , FeCl₃ oder AlSO₄) oder Aufhärtungsmittel (etwa Ca(HCO₃)₂-Lösungen).

### Bevorzugte Ausführungsformen der Erfindung

Besonders bevorzugt ist eine Ausführungsform der erfindungsgemäßen Dosieranlage, bei der die elektronische Steuereinrichtung dazu ausgebildet ist, automatisch Schritt c) regelmäßig zu wiederholen und die Dosieranlage gemäß Schritt d) mit dem jeweils zuletzt zugeordneten Betriebsmodus zu betreiben. Dadurch wird eine automatische Anpassung der Dosierleistung an die Wasserqualität eingerichtet. Bevorzugt wird der Sensor kontinuierlich oder in festen Zeitintervallen ausgelesen, typischerweise mit einer Häufigkeit zwischen jede Minute einmal und jede Woche einmal, oder nach festen behandelten Wassermengen, typischerweise mit einer Häufigkeit zwischen alle hundert Milliliter und alle hundert Liter.

Bevorzugt ist eine Ausführungsform, die vorsieht, dass der Sensor als Leitfähigkeitssensor oder pH-Sensor oder ionenselektive Elektrode, insbesondere Ca-ionenselektive Elektrode, oder als Temperatursensor ausgebildet ist, und der Wasserparameter eine Leitfähigkeit, ein pH-Wert, ein lonengehalt, insbesondere Ca-Ionengehalt, oder eine Temperatur des zu behandelnden Wassers ist. Über die Leitfähigkeit kann in der Regel gut auf die Härte und tendenziell auf das Korrosionsverhalten des zu behandelnden Wassers geschlossen werden. Der pH-Wert beeinflusst die Lage von Gleichgewichten im Wasser, insbesondere des Kalk-Kohlensäuregleichgewichts, und auch unmittelbar das Korrosionsverhalten. Über die ionenselektive Elektrode kann direkt auf den Calcium-Gehalt bzw. die Härte im zu behandelnden Wasser geschlossen werden (insbesondere wenn Leitfähigkeitsmessungen hierfür nicht oder nur ungenau auswertbar sind, etwa aufgrund vorangegangener lonentauschprozesse). Die Temperatur beeinflusst ebenfalls die Lage von Gleichgewichten, insbesondere des Kalk-Kohlensäure-Gleichgewichts, und beeinflusst die Geschwindigkeit insbesondere von Korrosionsprozessen. Falls auch eine oder mehrere weitere Sensoren vorgesehen sind bzw. ein oder mehrere weitere Wasserparameter zusätzlich ausgewertet werden, werden diese bevorzugt ebenfalls aus den oben angegebenen Möglichkeiten ausgewählt. Bevorzugt ist insbesondere eine Erfassung von Leitfähigkeit und pH-Wert oder Leitfähigkeit und Temperatur.

Vorteilhaft ist auch eine Ausführungsform, bei der die Dosieranlage einen Durchflussmesser umfasst, insbesondere im Zulauf. Mit diesem kann die Menge des zu behandelnden Wassers bestimmt werden und damit die Zudosierung genauer gestaltet werden. Alternativ kann die Zudosierung auch ohne explizite Bestimmung der zu behandelnden Wassermenge erfolgen, etwa durch zeitlich periodische Abgabe vordefinierter Mengen an Konditionierungsmittel unabhängig vom Wasserverbrauch, oder auch durch Mitreißen von Konditionierungsmittel je nach Stärke des Volumenstrom des zu behandelnden Wassers nach dem Prinzip der Wasserstrahl-Pumpe.

Besonders bevorzugt ist eine Ausführungsform, bei der die Dosieranlage mehrere Vorratsbehälter mit unterschiedlichen Wasserkonditionierungsmitteln umfasst. Dadurch können die einzelnen Wasserkonditionierungsmittel gezielter eingesetzt werden. Im einfachsten Fall enthält jeder Vorratsbehälter eine andere chemische Substanz zur Wasserbehandlung. Man beachte, dass in einem Betriebsmodus ein oder mehrere Wasserkonditionierungsmittel zudosiert werden können.

Eine bevorzugte Weiterbildung dieser Ausführungsform sieht vor, dass die Dosieranlage mehrere Vorratsbehälter mit Mischungen mehrerer chemischer Substanzen zur Wasserbehandlung umfasst, wobei die Mischungsverhältnisse der chemischen Substanzen in den Mischungen unterschiedlich sind, insbesondere wobei für jeden Betriebsmodus ein eigener Vorratsbehälter vorgesehen ist. Durch den Einsatz von Mischungen wird die relative Dosierung von unterschiedlichen chemischen Substanzen erleichtert. Wenn für jeden Betriebsmodus eine eigene Mischung in einem Vorratsbehälter vorgesehen ist, kann mit festem absoluten Verhältnis von Wasserkonditionierungsmittel und zu behandelndem Wasser operiert werden, was die Steuerung der Dosieranlage vereinfacht.

Vorteilhaft ist eine Ausführungsform, bei der gemäß der Programmierung des Speichers der elektronischen Steuereinrichtung innerhalb wenigstens einem der Betriebsmodi sowohl die Art des oder der Wasserkonditionierungsmittel, als auch die Menge des oder der Wasserkonditionierungsmittel, die je Menge des zu behandelndes Wasser zum Zudosieren vorgesehen sind, konstant sind. Dies ist besonders einfach anzusteuern; Dosierungsumstellungen innerhalb eines Betriebsmodus entfallen, was wiederum zur Verringerung von Verschleiß beitragen kann.

Bei einer anderen, vorteilhaften Ausführungsform sind gemäß der Programmierung des Speichers der elektronischen Steuereinrichtung die Art des oder der Wasserkonditionierungsmittel und/oder die Menge des oder der Wasserkonditionierungsmittel, die je Menge des zu behandelnden Wassers zum Zudosieren vorgesehen sind, innerhalb wenigstens einem der Betriebsmodi zeitlich veränderlich. Dadurch kann ein zu Beginn eines Betriebsmodus anderer Bedarf an Wasserkonditionierungsmittel im Vergleich zu späteren Zeiten berücksichtigt werden. Beispielsweise können ortho-Phosphate zum Schutz vor Korrosion dem Trinkwasser zudosiert werden. Dabei bildet sich eine Phosphat-Schutzschicht auf dem zu schützenden Werkstoff (etwa einem Stahlrohr). Zum Aufbau der Schutzschicht wird in der Anfangsphase eine größere Menge an ortho-Phosphat benötigt, während später zur Aufrechterhaltung der Schutzschicht geringere Konzentrationen ausreichen. Um diesem Effekt Rechnung zu tragen, kann im selben Betriebsmodus beispielsweise die Zudosierung von ortho-Phosphaten nach Behandlung einer bestimmten Wassermenge (etwa 50 m³) oder nach Ablauf einer bestimmten Zeit seit Beginn des Betriebsmodus (etwa nach 6 Monaten) halbiert werden.

Bei einer bevorzugten Ausführungsform der Dosieranlage ist vorgesehen, dass die Dosieranlage wenigstens einen weiteren Sensor zur Erfassung eines weiteren Wasserparameters im Zulauf umfasst, dass gemäß a) in einem Speicher der elektronischen Steuereinrichtung auch mehrere, aneinander anschließende, weitere Parameterintervalle möglicher Werte des weiteren Wasserparameters im zu behandelnden Wasser programmiert sind, und dass die elektronische Steuereinrichtung dazu eingerichtet ist, gemäß c) auch den weiteren Wasserparameter des unbehandelten Wassers zu messen, eine Zuordnung des gemessenen Wertes des weiteren Wasserparameters zu einem der weiteren Parameterintervalle vorzunehmen, und die Zuordnung des Betriebsmodus auch in Abhängigkeit vom zugeordneten, weiteren Parameterintervall vorzunehmen. Durch die Einbeziehung von (mindestens) einem weiteren Wasserparameter kann die Anpassung der Dosierleistung an die Wasserqualität noch genauer erfolgen.

Eine bevorzugte Ausführungsform ist dadurch gekennzeichnet, dass die Dosieranlage weiterhin einen Signalgeber umfasst, dass in einem Speicher der elektronischen Steuereinrichtung ein oberer Grenzwert und/oder ein unterer Grenzwert für den gemessenen Wasserparameter des zu behandelnden Wassers abgespeichert ist, und dass die elektronische Steuereinrichtung dazu ausgebildet ist, über den Signalgeber eine Alarmmeldung auszugeben, wenn der gemessene Wert des Wasserparameters des zu behandelnden Wassers den oberen Grenzwert überschreitet und/oder wenn der gemessene Wert des Wasserparameters des zu behandelnden Wassers den unteren Grenzwert unterschreitet. Durch den Alarm wird der Anwender auf eine erhebliche Änderung der Wasserqualität oder einen Defekt des Sensors aufmerksam gemacht.

Ebenso bevorzugt ist eine Ausführungsform, die vorsieht, dass in einem Speicher der elektronischen Steuereinrichtung ein oberer Grenzwert und/oder ein unterer Grenzwert für den gemessenen Wasserparameter des zu behandelnden Wassers abgespeichert ist, und dass die elektronische Steuereinrichtung dazu ausgebildet ist, in einen vordefinierten Standard-Betriebsmodus zu wechseln, wenn der gemessene Wert des Wasserparameters des zu behandelnden Wassers den oberen Grenzwert überschreitet und/oder wenn der gemessene Wert des Wasserparameters des zu behandelnden Wassers den unteren Grenzwert unterschreitet, insbesondere wobei der Standard-Betriebsmodus einem durchschnittlichen Wert des Wasserparameters des zu behandelnden Wassers aus vorangegangenen Messungen, bei denen der obere Grenzwert nicht überschritten und der untere Grenzwert nicht unterschritten wurde, entspricht, wobei dieser durchschnittliche Wert des Wasserparameters in einem Speicher der elektronischen Steuereinrichtung gespeichert ist. Ein zu extremer Wert für den Wasserparameter ist nicht mehr vertrauenswürdig und deutet auf einen Sensordefekt hin; die Steuereinrichtung geht dann in den Standard-Betriebsmodus über, der unabhängig vom (nicht vertrauenswürdigen) Messwert des Wasserparameters arbeitet, wobei bevorzugt ein durchschnittlicher Messwert angenommen wird. Dadurch wird in der Regel eine besser passende Dosierleistung als mit dem tatsächlichen Messwert erreicht.

### Verfahren zum Betrieb einer Dosieranlage

In den Rahmen der vorliegenden Erfindung fällt auch ein Verfahren zum Betrieb einer Dosieranlage, wobei mit der Dosieranlage Wasserkonditionierungsmittel in zu behandelndes Wasser, nämlich einen Strom von an einem Zulauf zufließendem, zu behandelndem Wasser, zudosiert wird, so dass ein behandeltes Wasser, nämlich ein Strom von an einem Ablauf abfließendem, behandelten Wasser, erhalten wird, wobei ein Wasserparameter des zu behandelnden Wassers mit einem Sensor ermittelt wird und die Dosieranlage abhängig von dem ermittelten Wert des Wasserparameters mit wenigstens einer Dosierpumpe, die aus wenigstens einem Vorratsbehälter Wasserkonditionierungsmittel fördert und von einer elektronischen Steuereinrichtung angesteuert wird, Wasserkonditionierungsmittel dem zu behandelnden Wasser zusetzt, mit folgenden Schritten:
a) Definition von wenigstens drei aneinander anschließenden Parameterintervallen möglicher Werte des Wasserparameters des zu behandelnden Wassers;
b) Definition von wenigstens drei Betriebsmodi, wobei verschiedene Betriebsmodi verschiedene Zudosierungen von Wasserkonditionierungsmittel zum zu behandelnden Wasser vorsehen;
c) Messung des Wasserparameters des zu behandelnden Wassers, Zuordnung des gemessenen Werts des Wasserparameters des zu behandelnden Wassers zu einem der Parameterintervalle, und Zuordnung eines Betriebsmodus in Abhängigkeit vom zugeordneten Parameterintervall, wobei für die wenigstens drei Parameterintervalle unterschiedliche Zudosierungen von Wasserkonditionierungsmittel vorgesehen sind;
d) Betrieb der Dosieranlage gemäß dem zugeordneten Betriebsmodus, wobei in wenigstens zwei Betriebsmodi die Zudosierung einer unterschiedlichen Menge eines identischen Wasserkonditionierungsmittels je Menge des zu behandelnden Wasser vorgesehen ist, so dass in den wenigstens zwei Betriebsmodi eine unterschiedliche Konzentration des identischen Wasserkonditionierungsmittels im behandelten Wasser erhalten wird. Mit diesem Betriebsverfahren ist die Dosierleistung der Dosieranlage an eine veränderte Wasserqualität anpassbar, wobei die Häufigkeit von Nachregelprozessen über die Betriebsmodi bzw. Parameterintervalle reduziert werden kann. Gemäß der Erfindung ist in wenigstens zwei Betriebsmodi die Zudosierung einer unterschiedlichen Menge eines identischen Wasserkonditionierungsmittels je Menge des zu behandelnden Wassers vorgesehen, so dass in den wenigstens zwei Betriebsmodi eine unterschiedliche Konzentration des identischen Wasserkonditionierungsmittels im behandelten Wasser erhalten wird. Die Menge bzw. Konzentration desselben Wasserkonditionierungsmittels kann so direkt an die Wasserqualität angepasst werden. Das Verfahren kann insbesondere zum Betrieb einer obigen, erfindungsgemäßen Dosieranlage eingesetzt werden.

Besonders bevorzugt ist eine Variante des erfindungsgemäßen Verfahrens, bei der Schritt c) regelmäßig wiederholt wird und der Betrieb gemäß Schritt d) mit dem jeweils zuletzt zugeordneten Betriebsmodus erfolgt. Dadurch wird eine automatische Anpassung der Dosierleistung an die Wasserqualität eingerichtet. Bevorzugt wird Schritt c) in festen Zeitintervallen oder nach festen behandelten Wassermengen wiederholt.

Bei einer vorteilhaften Variante ist in wenigstens einem ersten Betriebsmodus ein Zudosieren eines ersten Wasserkonditionierungsmittels vorgesehen, und in wenigstens einem zweiten Betriebsmodus ein Zudosieren dieses ersten Wasserkonditionierungsmittels nicht vorgesehen. Das erste Wasserkonditionierungsmittel wird nur zugesetzt, wenn es wirklich benötigt wird.

Bei einer Weiterentwicklung dieser Variante ist in dem wenigsten einen, zweiten Betriebsmodus das Zudosieren eines zweiten Wasserkonditionierungsmittels vorgesehen, und in dem wenigstens einen, ersten Betriebsmodus ein Zudosieren dieses zweiten Wasserkonditionierungsmittels nicht vorgesehen. Auch das zweite Wasserkonditionierungsmittel wird nur zugesetzt, wenn es wirklich benötigt wird, wobei das erste und das zweite Wasserkonditionierungsmittel jeweils an unterschiedliche Wasserqualitäten angepasst sind.

Eine andere, bevorzugte Verfahrensvariante sieht vor, dass in wenigstens einem Betriebsmodus ein Zudosieren von wenigstens zwei verschiedenen Wasserkonditionierungsmitteln vorgesehen ist. Die beiden verschiedenen Wasserkonditionierungsmittel werden grundsätzlich in verschiedenen Vorratsbehältern vorgehalten. Mit zwei verschiedenen Wasserkonditionierungsmitteln können verschiedene Eigenschaften des Wassers gezielt und voneinander unabhängig eingestellt werden.

Besonders vorteilhaft ist eine Verfahrensvariante, bei der innerhalb wenigstens einem der Betriebsmodi sowohl die Art des oder der Wasserkonditionierungsmittel, als auch die Menge des oder der Wasserkonditionierungsmittel, die je Menge des zu behandelndes Wasser zum Zudosieren vorgesehen sind, konstant sind. Dies ist besonders einfach anzusteuern; Dosierungsumstellungen innerhalb eines Betriebsmodus entfallen, was wiederum zur Verringerung von Verschleiß beitragen kann. Bevorzugt sind alle Betriebsmodi (zeitlich) konstant eingerichtet.

Ebenfalls vorteilhaft ist eine Verfahrensvariante, bei der die Art des oder der Wasserkonditionierungsmittel und/oder die Menge des oder der Wasserkonditionierungsmittel, die je Menge des zu behandelnden Wassers zum Zudosieren vorgesehen sind, innerhalb wenigstens einem der Betriebsmodi zeitlich veränderlich sind. Dadurch kann ein zu Beginn eines Betriebsmodus anderer Bedarf an Wasserkonditionierungsmittel im Vergleich zu späteren Zeiten berücksichtigt werden.

Besonders bevorzugt ist eine Verfahrensvariante, die vorsieht, dass in Schritt a) auch eine Definition von mehreren, aneinander anschließenden, weiteren Parameterintervallen möglicher Werte wenigstens eines weiteren Wasserparameters im zu behandelnden Wasser erfolgt, und dass in Schritt c) auch der weitere Wasserparameter des unbehandelten Wassers gemessen wird, eine Zuordnung des Werts des gemessenen, weiteren Wasserparameters zu einem der weiteren Parameterintervalle erfolgt, und die Zuordnung des Betriebsmodus auch in Abhängigkeit vom zugeordneten weiteren Parameterintervall erfolgt. Durch die Einbeziehung von (mindestens) einem weiteren Wasserparameter kann die Anpassung der Dosierleistung an die Wasserqualität noch genauer erfolgen. Bevorzugt werden bei Verwendung von zwei Wasserparametern die Leitfähigkeit und der pH-Wert, oder aber die Leitfähigkeit und die Temperatur des zu behandelnden Wassers bestimmt.

Bei einer vorteilhaften Verfahrensvariante erfolgt eine Alarmmeldung, wenn der gemessene Wert des Wasserparameters des zu behandelnden Wassers einen oberen Grenzwert überschreitet und/oder wenn der gemessene Wert des Wasserparameters des zu behandelnden Wassers einen unteren Grenzwert unterschreitet. Durch den Alarm wird der Anwender auf eine erhebliche Änderung der Wasserqualität oder einen Defekt des Sensors aufmerksam gemacht.

Gleichfalls bevorzugt ist eine Verfahrensvariante, die vorsieht, dass in einen vordefinierten Standard-Betriebsmodus gewechselt wird, wenn der gemessene Wert des Wasserparameters des zu behandelnden Wassers einen oberen Grenzwert überschreitet und/oder wenn der gemessene Wert des Wasserparameters des zu behandelnden Wassers einen unteren Grenzwert unterschreitet, insbesondere wobei der Standard-Betriebsmodus einem durchschnittlichen Wert des Wasserparameters des zu behandelnden Wassers aus vorangegangenen Messungen, bei denen der obere Grenzwert nicht überschritten und der untere Grenzwert nicht unterschritten wurde, entspricht. Ein zu extremer Wert für den Wasserparameter ist nicht mehr vertrauenswürdig und deutet auf einen Sensordefekt hin; gemäß der Variante wird dann in den Standard-Betriebsmodus übergegangen, der unabhängig vom (nicht vertrauenswürdigen) Messwert des Wasserparameters arbeitet, wobei bevorzugt ein durchschnittlicher Messwert angenommen wird. Dadurch wird in der Regel eine besser passende Dosierleistung als mit dem tatsächlichen Messwert erreicht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: ein Ablaufdiagramm einer Variante eines Verfahrens zum Betrieb einer Dosieranlage gemäß der Erfindung;
- Fig. 2: ein Zuordnungsdiagramm einer Variante eines Verfahrens zum Betrieb einer Dosieranlage gemäß der Erfindung;
- Fig. 3: ein Zuordnungsdiagramm einer weiteren Variante eines Verfahrens zum Betrieb einer Dosieranlage gemäß der Erfindung;
- Fig. 4: eine schematische Darstellung einer ersten Ausführungsform einer Dosieranlage gemäß der Erfindung, mit einem Leitfähigkeitssensor und einem Vorratsbehälter für Wasserkonditionierungsmittel;
- Fig. 5: eine schematische Darstellung einer zweiten Ausführungsform einer Dosieranlage gemäß der Erfindung, mit einem Leitfähigkeitssensor und einem pH-Meter sowie zwei Vorratsbehältern für Wasserkonditionierungsmittel mit jeweils eigener Dosierpumpe;
- Fig. 6: eine schematische Darstellung einer dritten Ausführungsform einer Dosieranlage gemäß der Erfindung, mit einem Leitfähigkeitssensor und einem Thermometer sowie drei Vorratsbehältern für Wasserkonditionierungsmittel mit gemeinsamer Dosierpumpe.

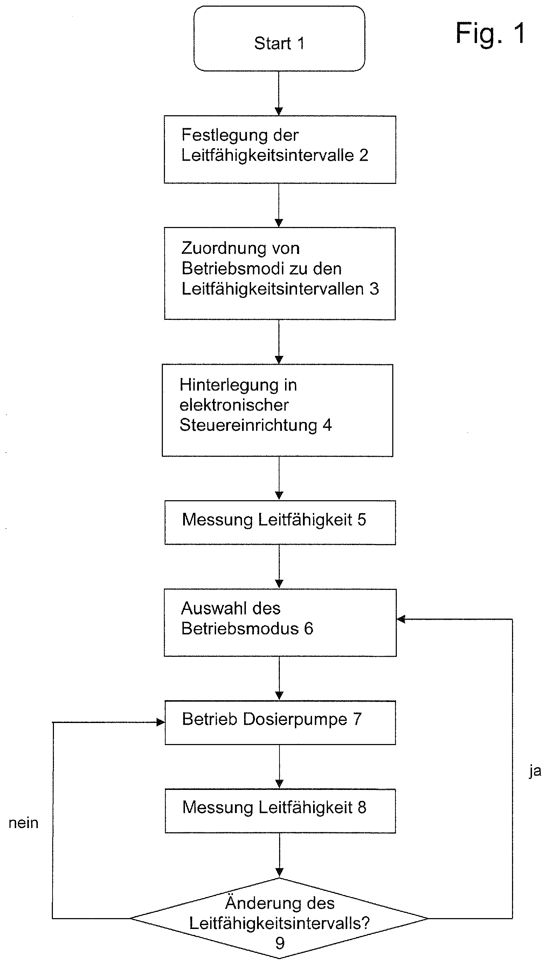

**Fig. 1** illustriert mit einem Ablaufdiagramm den grundsätzlichen Ablauf eines Verfahrens zum Betrieb einer Dosieranlage gemäß der Erfindung. Als Wasserparameter wird hier beispielhaft die Leitfähigkeit des zu behandelnden Wassers herangezogen; weitere Wasserparameter werden in diesem Beispiel nicht ausgewertet.

Anlässlich des Starts 1 des Verfahrens erfolgt eine Festlegung (Definition) von Leitfähigkeitsintervallen 2. Sodann werden zu diesen Leitfähigkeitsintervallen Betriebsmodi festgelegt und zugeordnet 3. Die Leitfähigkeitsintervalle und die Betriebsmodi (einschließlich der gegenseitigen Zuordnung) werden in einer elektronischen Steuereinrichtung der Dosieranlage hinterlegt (programmiert) 4.

Nach diesen vorbereitenden Schritten (die in der Regel nur einmalig durchgeführt werden) wird die Leitfähigkeit eines zu behandelnden Wassers gemessen 5. Die bestimmte Leitfähigkeit fällt in eines der definierten Leitfähigkeitsintervalle, wodurch sich ein zugeordneter Betriebsmodus ergibt. Dieser Betriebsmodus wird für die Zudosierung von Wasserkonditionierungsmittel ausgewählt 6; die (hier einzige) Dosierpumpe der Dosieranlage wird entsprechend diesem Betriebsmodus betrieben 7, wodurch in der Regel eine bestimmte Konzentration von Wasserkonditionierungsmittel im behandelten Wasser vorgegeben wird.

Im Folgenden wird die Leitfähigkeit erneut gemessen 8 und die Zuordnung zu zum bisherigen Leitfähigkeitsintervall überprüft. Falls der gemessene Wert in ein anderes Leitfähigkeitsintervall fällt als der zuvor gemessene Wert, vgl. Prüfung 9, wird mit der Neubestimmung des Betriebsmodus in Schritt 6 fortgesetzt. Falls die Zugehörigkeit zum bisherigen Leitfähigkeitsintervall sich nicht geändert hat, kann mit dem Betrieb der Dosierpumpe 7 im unveränderten Betriebsmodus fortgefahren werden.

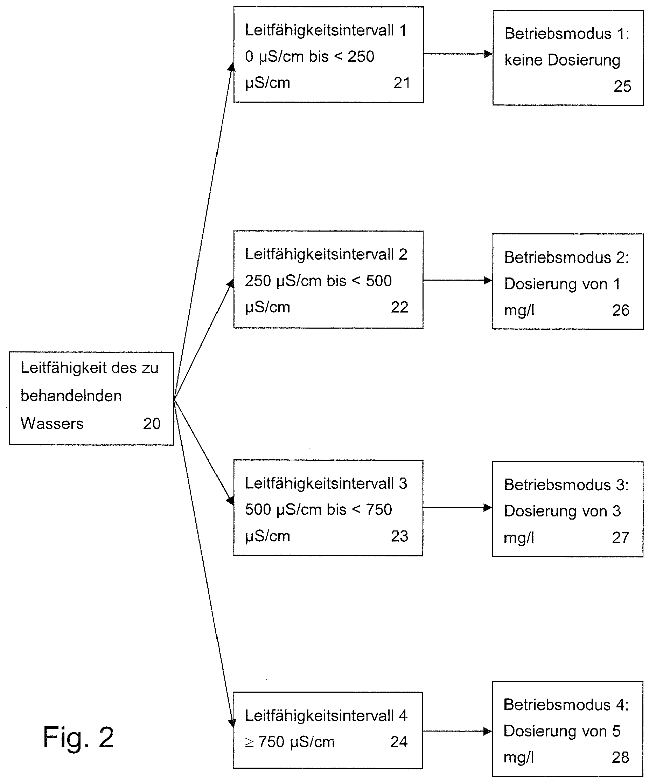

Die **Fig. 2** illustriert die Definition und Zuordnung von Parameterintervallen und Betriebsmodi in einem Beispiel, bei welchem wiederum nur die Leitfähigkeit 20 des zu behandelnden Wassers (hier Trinkwassers) als Wasserparameter bestimmt wird. Weitere Wasserparameter werden hier nicht ausgewertet. Ein Wasserkonditionierungsmittel (hier Härtestabilisierungsmittel) wird in verschiedenen Konzentrationen eingesetzt. Der allgemeine Verfahrensablauf kann wie in Fig. 1 dargestellt erfolgen.

Insgesamt sind vier Leitfähigkeitsintervalle 21, 22, 23, 24 definiert. Das erste Leitfähigkeitsintervall 21 umfasst die Leitfähigkeitswerte von 0 bis unter 250 µS/cm, das zweite Leitfähigkeitsintervall 22 umfasst die Leitfähigkeitswerte von 250 bis unter 500µS/cm, das dritte Leitfähigkeitsintervall 23 umfasst die Leitfähigkeitswerte von 500 bis unter 750 µS/cm, und das vierte Leitfähigkeitsintervall 24 alle Leitfähigkeitswerte ab 750 µS/cm.

Jedem Leitfähigkeitsintervall ist hier genau ein Betriebsmodus 25, 26, 27, 28 zugeordnet. Die Betriebsmodi 25-28 sehen alle verschiedene Zudosierungen eines Härtestabilisierungsmittels (hier poly-Phosphate) vor. Im ersten Betriebsmodus 25, der dem ersten Leitfähigkeitsintervall 21 zugeordnet ist, wird kein Härtestabilisierungsmittel zugesetzt. Im zweiten Betriebsmodus 26, der dem zweiten Leitfähigkeitsintervall 22 zugeordnet ist, wird 1 mg Härtestabilisierungsmittel pro Liter an zu behandelndem Wasser zugesetzt. Im dritten Betriebsmodus 27, welcher dem dritten Leitfähigkeitsintervall 23 zugeordnet ist, wird 3 mg/l zudosiert, und im vierten Betriebsmodus 28 wird schließlich 5 mg/l zudosiert. Die Zudosierungen sind jeweils zeitunabhängig ("konstant").

Die Trinkwasserverordnung schreibt vor, dass Phosphate bis zu einer Konzentration von maximal 5 mg/l (gemessen als P₂O₅) dem Trinkwasser zudosiert werden dürfen.

Das erste Leitfähigkeitsintervall 21 entspricht einer Härte des zu behandelnden Wassers von 0°dH bis 7°dH. Das sehr weiche Wassers benötigt keine poly-Phosphate zur Härtestabilisierung. Im zweiten Leitfähigkeitsintervall (Leitfähigkeitsbereich) 22 liegt eine Wasserhärte von 7°dH bis 14°dH. vor. Das mittelharte Wasser benötigt wenig härtestabilisierende Wasserkonditionierungsmittel. Im dritten Leitfähigkeitsintervall 23 liegt hartes Wasser mit einer Härte von 14°dH bis 21°dH vor. Hier ist eine stärkere Härtestabilisierung notwendig, die Konzentration an zudosiertem poly-Phosphat steigt auf 3 mg/l. Im vierten Leitfähigkeitsintervall (Leitfähigkeitsbereich) 24 liegt sehr hartes Wasser mit einer Härte größer 21°dH vor. Hier wird die gemäß Trinkwasserverordnung maximal zulässige Konzentration von 5 mg/l an härtestabilisierenden poly-Phosphaten zudosiert. Die Leitfähigkeit des zu behandelnden Wassers wird hier also einer Wasserhärte zugeordnet; die Leitfähigkeitsintervalle entsprechen somit Härtebereichen.

Das erfindungsgemäße Verfahren stellt auf einfache Art und Weise sicher, dass die vorgegebenen Grenzwerte der Trinkwasserverordnung bei jeder Wasserqualität eingehalten werden. Dies ist eine zentrale Anforderung der DIN 19635-100, die als Prüfgrundlage für DVGW-Zertifizierungen von Dosiersystemen dient.

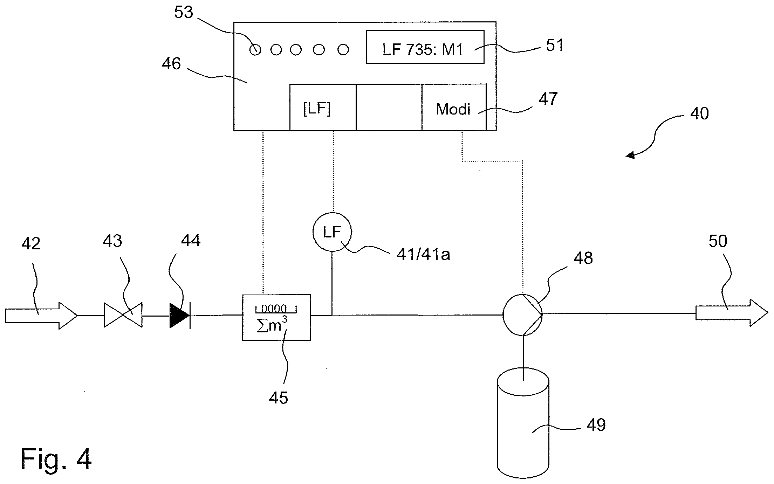

Im vorgenannten Beispiel wird ein identisches Wasserbehandlungsmittel je nach Betriebsmodus in unterschiedlicher Konzentration zugesetzt; die Zudosierung kann auf einfache Weise mit der in Fig. 4 dargestellten Dosieranlage erfolgen (siehe unten).

In ähnlicher Weise kann auch Heizungswasser mit Korrosionsschutzmittel in Abhängigkeit von der Leitfähigkeit als Wasserparameter versetzt werden. Je höher die bestimmte Leitfähigkeit des zu behandelnden Heizungswassers ist, desto wahrscheinlicher ist das Auftreten von Korrosion im Heizungssystem. Entsprechend mehr Korrosionsschutzmittel muss dem Heizungswasser zudosiert werden. Eine Einteilung kann hier beispielsweise folgendermaßen vorgenommen werden:

| Leitfähigkeitsintervall | zudosierte Menge an Korrosionsschutzmittel (Betriebsmodus) |
|---|---|
| < 100 µS/cm | gering |
| 100 µS/cm bis 1000 µS/cm | mittel |
| > 1000 µS/cm | groß |

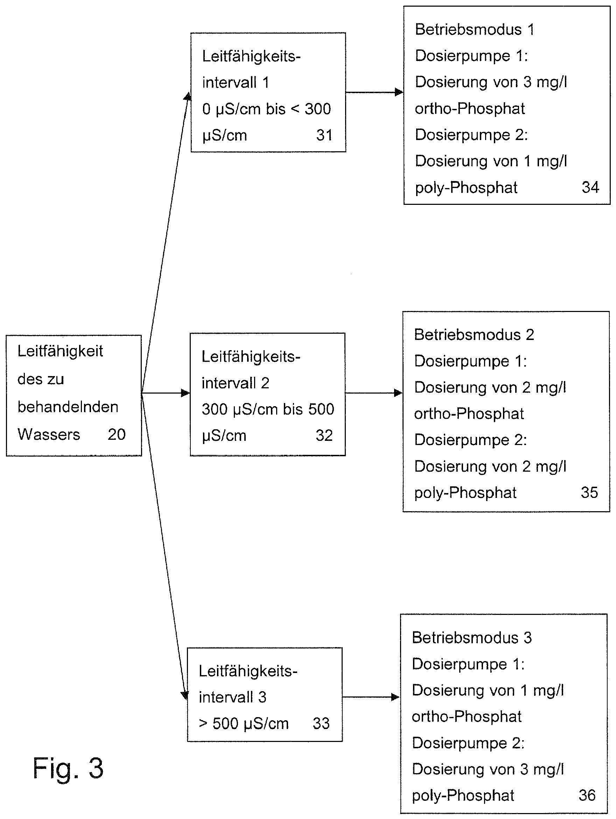

**Fig. 3** illustriert die Definition und Zuordnung von Parameterintervallen und Betriebsmodi in einem Beispiel, bei welchem wiederum nur die Leitfähigkeit 20 des zu behandelnden Wassers (hier Trinkwassers) als Wasserparameter bestimmt wird. Weitere Wasserparameter werden hier nicht ausgewertet. Jedoch werden mehrere Wasserkonditionierungsmittel eingesetzt.

Die gemäß der in Fig. 3 illustrierten Definition und Zuordnung betriebene Dosieranlage umfasst zwei Dosierpumpen, wobei die erste Dosierpumpe korrosionshemmende ortho-Phosphate dosiert, während die zweite Dosierpumpe mit härtestabilisierenden poly-Phosphaten betrieben wird.

Im ersten Leitfähigkeitsintervall 31 (unter 300 µS/cm) liegt weiches Wasser vor. Weiches Wasser neigt sehr wenig zur Steinbildung, jedoch können bei weichen Wässern Korrosionserscheinungen in Hausinstallationen auftreten, da eine Schutzschichtbildung auf Rohrwandungen ausbleibt. Es werden deshalb im ersten Leitfähigkeitsintervall 31 wenig härtestabilisierende poly-Phosphate (Konzentration 1 mg/l) eingesetzt, wohingegen die Konzentration der zudosierten korrosionshemmenden ortho-Phosphate hoch ist (3 mg/l). Dies ist im zugeordneten ersten Betriebsmodus 34 festgelegt.

Im dritten Leitfähigkeitsbereich 33 (über 500 µS/cm) liegt hartes Wasser vor. Steinbildung ist in hartem Wasser ausgeprägt, dagegen sind Korrosionserscheinungen eher von untergeordneter Bedeutung. Die erste Dosierpumpe dosiert jetzt wenig ortho-Phosphat (1 mg/l), während die zweite Dosierpumpe eine hohe Konzentration an härtestabilisierenden poly-Phosphaten dem zu behandelnden Wasser beigibt (3 mg/l). Dies ist im zugeordneten dritten Betriebsmodus 36 festgelegt.

Der zweite Leitfähigkeitsbereich 32 deckt Wasser mittlerer Härte (300 bis 500 µS/cm) ab. Hier wird eine mittlere Konzentration an ortho- und poly-Phosphaten (je 2 mg/l) zur Wasserkonditionierung eingesetzt. Dies ist im zugeordneten zweiten Betriebsmodus 35 festgelegt.

Die zudosierte Gesamtphosphatkonzentration liegt in allen drei Leitfähigkeitsbereichen 31, 32, 33 bei 4 mg/l.

In einer Variante dieses Beispiels kann auch bei weichem Wasser auf die Gabe von härtestabilisierenden poly-Phosphaten ganz verzichtet werden, und bei hartem Wasser kann auf die Gabe von korrosionshemmenden ortho-Phosphaten ganz verzichtet werden, wie in nachstehender Tabelle erläutert:

| Leitfähigkeitsintervall | Wasserhärte | Problem | Wasserkonditionierungsmittel (Betriebsmodus) |
|---|---|---|---|
| < 300 µS/cm | weich | Korrosion | ortho-Phosphate |
| 300 µS/cm bis 500 µS/cm | mittel | Korrosion und Steinbildung | ortho- und poly-Phosphate |
| > 500 µS/cm | hart | Steinbildung | poly-Phosphate |

Im Rahmen der Erfindung ist es auch möglich, mehrere Wasserparameter zur Festlegung des Betriebsmodus über zugehörige Parameterintervalle heranzuziehen. Entsprechend wird für die Zuordnung zu den Betreibsmodi dann mehrdimensional.

### Überwachung mehrerer Wasserparameter

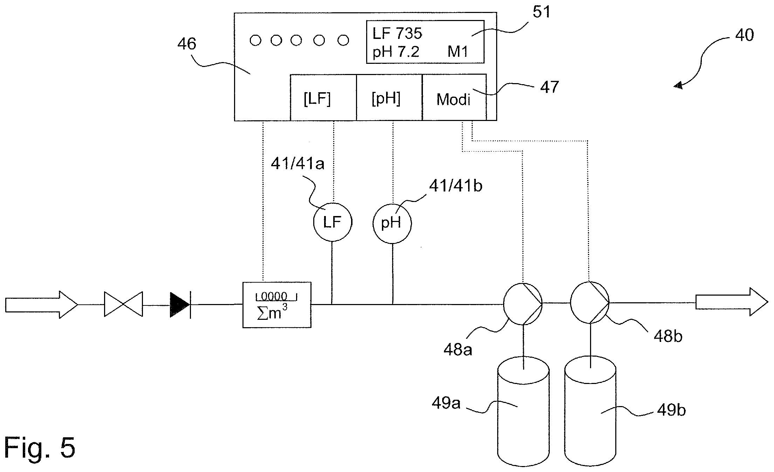

In nachfolgender Tabelle ist ein Beispiel illustriert, bei dem als Wasserparameter die Leitfähigkeit und der pH-Wert des zu behandelnden Wassers überwacht werden; an den Kreuzungspunkten der Tabelle ist jeweils ein Betriebsmodus für die zugehörigen Parameterintervalle definiert. Dieses Beispiel kann mit der Dosieranlage von Fig. 5 realisiert werden (siehe unten).

| | pH < 8,2 | 8,2 ≤ pH ≤ 8,5 | pH > 8,5 |
|---|---|---|---|
| Leitfähigkeit < 100 µS/cm | geringe Konzentration an Korrosionsschutzmittel, zusätzlich Puffer | geringe Konzentration an Korrosionsschutzmittel, kein Puffer | geringe Konzentration an Korrosionsschutzmittel, zusätzlich Puffer |
| 100 µS ≤ Leitfähigkeit ≤ 1000 µS/cm | mittlere Konzentration an Korrosionsschutzmittel, zusätzlich Puffer | mittlere Konzentration an Korrosionsschutzmittel, kein Puffer | mittlere Konzentration an Korrosionsschutzmittel, zusätzlich Puffer |
| Leitfähigkeit > 1000 µS/cm | hohe Konzentration an Korrosionsschutzmittel, zusätzlich Puffer | hohe Konzentration an Korrosionsschutzmittel, kein Puffer | hohe Konzentration an Korrosionsschutzmittel, zusätzlich Puffer |

Die Wasserbehandlung soll die Korrosionsgefahr in einem Heizkreislauf, in welchem aluminiumhaltige Werkstoffe und andere Werkstoffe (Stahl, Kupfer) verbaut sind, senken. Aluminiumhaltige Werkstoffe korrodieren bei pH-Werten oberhalb 8,5, während für die Beständigkeit anderer Werkstoffe in Heizungsanlagen wie Stahl und Kupfer ein pH-Wert im alkalischen Bereich oberhalb 8,2 günstig ist. Durch Pufferzugabe kann der pH-Wert im behandelten Wasser in einen gewünschten pH-Bereich zwischen 8,2 und 8,5 überführt werden. Abhängig von der Leitfähigkeit wird Korrosionsschutzmittel zugesetzt.

Man beachte, dass hier bei jeweils gleicher Leitfähigkeit für niedrige pH-Werte (unter 8,2) und hohe pH-Werte (über 8,5) jeweils gleiche Zudosierungen von Wasserbehandlungsmitteln vorgesehen sind, d.h. die Betriebsmodi sind in so weit gleich.

Die **Fig. 4** zeigt schematisch eine Ausführungsform einer erfindungsgemäßen Dosieranlage 40, bei der als Wasserparameter die Leitfähigkeit des zu behandelnden Wassers mit einem Sensor 41, nämlich einem Leitfähigkeitssensor 41 a, erfasst wird.

Das zu behandelnde Wasser fließt durch einen Zulauf 42 zu, wobei der Zulauf 42 mit einem Absperrventil 43 verschlossen werden kann (man beachte, dass der Zulauf 42 bis zur Dosierpumpe 48 reicht). Ein Rückschlagventil 44 verhindert einen Rückfluss entgegen der normalen Zuflussrichtung. Das zufließende, zu behandelnde Wasser wird weiterhin mit einem Durchflussmesser 45 quantitativ mitverfolgt.

In einer elektronischen Steuereinrichtung 46 sind in einem Speicher 47 Definitionen von Parameterintervallen der elektrischen Leitfähigkeit, verschiedene Betriebsmodi und deren Zuordnungen abgespeichert. Die elektronische Steuereinrichtung 46 wertet die Signale des Sensors 41 aus (d.h. bestimmt die Leitfähigkeit LF des zu behandelnden Wassers) und ordnet den zugehörigen Betriebsmodus zu.

Gemäß diesem Betriebsmodus wird die Dosierpumpe 48 von der Steuereinrichtung 46 angesteuert, die aus einem Vorratsbehälter 49 ein Wasserkonditionierungsmittel fördert. Dabei wird die Förderleistung so gewählt, dass sich unter Berücksichtigung der durchfließenden Wassermenge, die mit dem Durchflussmesser 45 bestimmt wird, eine dem Betriebsmodus entsprechende Konzentration des Wasserkonditionierungsmittels im behandelten Wasser hinter der Dosierpumpe 48 ergibt. Das behandelte Wasser fließt durch einen Ablauf 50 ab (man beachte, dass der Ablauf 50 hinter der Dosierpumpe 48 beginnt).

Zur Information des Anwenders ist an der elektronischen Steuereinrichtung 46 eine Anzeige 51 vorgesehen, die die derzeitige gemessene Leitfähigkeit (hier 735 µS/cm) sowie den derzeit gültigen Betriebsmodus (hier "M1") ausgibt. Mittels eines Signalgebers 53 (hier einem Lichtsignal) kann ein außergewöhnlicher Leitfähigkeitsmesswert (beispielsweise oberhalb 2000 µS/cm oder unterhalb 50 µSlcm; die Grenzwerte sind im Speicher 47 abgelegt) signalisiert werden; ein solch außergewöhnlicher Messwert deutet auf einen Defekt im Sensor 41 hin. Die Steuereinrichtung 46 stellt bei einem solchen außergewöhnlichen Messwert auf einen Standard-Betriebsmodus um, so als ob ein vordefinierter mittlerer oder bezüglich vergangener Messungen durchschnittlicher Leitfähigkeitswert (beispielsweise 400 µS/cm) gemessen worden wäre.

In **Fig. 5** ist eine zweite Ausführungsform einer erfindungsgemäßen Dosieranlage 40 schematisch dargestellt. Es werden im Folgenden die wesentlichen Unterschiede zur Ausführungsform von Fig. 4 erläutert.

Die Dosieranlage 40 umfasst zwei Sensoren 41, nämlich einen Leitfähigkeitssensor 41 a und eine pH-Elektrode 41 b, die die Qualität des zu behandelnden Wassers überprüfen; die Signale der Sensoren 41 werden wiederum von der elektronischen Steuereinrichtung 46 ausgewertet. Diese hat in ihrem Speicher 47 Definitionen von Parameterintervallen sowohl für die elektrische Leitfähigkeit als auch für den pH-Wert gespeichert (programmiert), und die Zuordnung eines Betriebsmodus erfolgt unter Berücksichtigung der Zugehörigkeit des zum aktuellen Leitfähigkeitswert gehörenden Parameterintervalls und des zum aktuellen pH-Wert gehörenden, weiteren Parameterintervalls. Die Anzeige 51 gibt hier die aktuelle Leitfähigkeit, den aktuellen pH-Wert und den gültigen Betriebsmodus aus.

Die Steuereinrichtung 46 steuert hier zwei Dosierpumpen 48a, 48b an, die jeweils mit eigenen Vorratsbehältern 49a, 49b mit verschiedenen Wasserkonditionierungsmitteln verbunden sind. Dadurch kann die Steuereinrichtung 46 die beiden Wasserkonditionierungsmittel unabhängig voneinander zudosieren. Beispielsweise enthält einer der Vorratsbehälter 49a ein Korrosionsschutzmittel, und der andere Vorratsbehälter eine Pufferlösung.

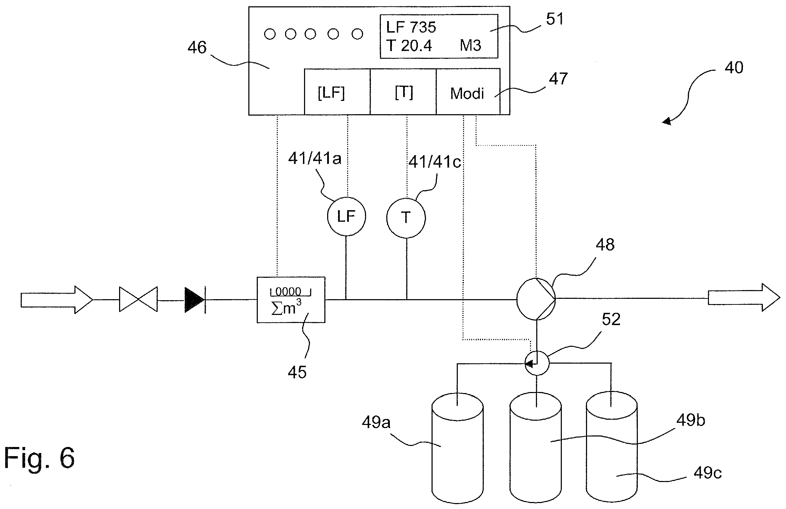

**Fig. 6** zeigt schematisch eine dritte Ausführungsform einer erfindungsgemäßen Dosieranlage 40; es werden wiederum nur die wesentlichen Unterschiede zu den vorhergehenden Ausführungsformen erläutert.

Die Dosieranlage 40 umfasst hier zwei Sensoren 41, nämlich einen Leitfähigkeitssensor 41 a und einen Temperatursensor 41 c zur Bestimmung der Qualität des zu behandelnden Wassers. Die Signale der Sensoren 41 werden an die elektronische Steuereinrichtung 46 weitergeleitet. Der Speicher 47 der Steuereinrichtung 46 enthält Definitionen von Parameterintervallen sowohl für die Leitfähigkeit LF als auch für die Temperatur T, und die Zuordnung eines Betriebsmodus erfolgt unter Berücksichtigung der Zugehörigkeit des zum aktuellen Leitfähigkeitswert gehörenden Parameterintervalls und des zur aktuellen Wassertemperatur gehörenden, weiteren Parameterintervalls. Die Anzeige 51 gibt hier die aktuelle Leitfähigkeit, die aktuelle Temperatur und den gültigen Betriebsmodus aus.

Die Steuereinrichtung 46 steuert hier eine Dosierpumpe 48 und ein motorisch umschaltbares Ventil 52 an. Mit dem Ventil 52 kann einer von drei Vorratsbehältern 49a, 49b, 49c ausgewählt werden, aus dem die Dosierpumpe 48 Wasserkonditionierungsmittel ansaugt und in das zu behandelnde Wasser fördert. Die Förderleistung wird an den momentanen Wasserdurchfluss, wie er mit dem Durchflussmesser 45 ermittelt wird, angepasst, so dass sich eine gewünschte, dem gültigen Betriebsmodus entsprechende Konzentration des Wasserkonditionierungsmittels im behandelten Wasser ergibt.

Die drei Vorratsbehälter 49a, 49b, 49c enthalten hier jeweils unterschiedliche Mischungen von ortho-Phosphaten und poly-Phosphaten.

Im ersten Vorratsbehälter 49a ist hier ein Konditionierungsmittel mit 3 mg eines ortho-Phosphats und 10 mg eines poly-Phosphats pro 1 ml Lösung enthalten; dieses Konditionierungsmittel wird für weiches Wasser eingesetzt.

Im zweiten Vorrastbehälter 49b ist ein Konditionierungsmittel mit 2 mg eines ortho-Phosphats und 20 mg eines poly-Phosphats pro 1 ml Lösung enthalten; dieses Konditionierungsmittel wird für mittelhartes Wasser eingesetzt.

Im dritten Vorrastbehälter 49c ist ein Konditionierungsmittel mit 1 mg eines ortho-Phosphats und 30 mg eines poly-Phosphats pro 1 ml Lösung enthalten; dieses Konditionierungsmittel wird für hartes Wasser eingesetzt.

Bei Zugriff auf jeden der Vorratsbehälter 49a, 49b, 49c wird bei Temperaturen unter 10°C eine Konzentration von 0,05 ml Lösung je Liter zu behandelndes Wasser zudosiert. Bei Temperaturen zwischen 10°C und 30°C werden 0,10 ml Lösung je Liter zu behandelndes Wasser zudosiert, und bei Temperaturen über 30°C werden 0,15 ml Lösung je Liter zu behandelndes Wasser zudosiert. Durch die höheren Konzentrationen an Wasserkonditionierungsmittel bei höheren Temperaturen kann die bei höherer Temperatur größere Korrosionsneigung und die höhere Kalkabscheidungsrate kompensiert werden.

Zusammenfassend beschreibt die Erfindung eine Dosieranlage und ein Verfahren zu deren Betrieb, wobei die Wasserqualität des zu behandelnden Wassers anhand wenigstens eines Wasserparameters überwacht wird. Für diese Überwachung wird wenigstens ein Sensor, insbesondere ein Leitfähigkeitssensor, eingesetzt. Ein Betriebsmodus, welcher die Förderleistung wenigstens einer Dosierpumpe für ein Wasserkonditionierungsmittel festlegt, wird über die Zugehörigkeit eines Messwerts des Wasserparameters zu einem von mehreren Parameterintervallen bestimmt. Dadurch kann der Regelungsaufwand der Dosieranlage verringert werden.

## Patentansprüche

1. Dosieranlage (40), umfassend
- einen Zulauf (42) für zufließendes, zu behandelndes Wasser,
- einen Sensor (41) für die Erfassung eines Wasserparameters im Zulauf (42),
- einen Ablauf (50) für abfließendes, behandeltes Wasser,
- wenigstens einen Vorratsbehälter (49; 49a-49c) mit Wasserkonditionierungsmittel,
- wenigstens eine Dosierpumpe (48; 48a-48b) zum Zudosieren von Wasserkonditionierungsmittel aus dem wenigstens einen Vorratsbehälter (49; 49a-49c) in das zu behandelnde Wasser zwischen Zulauf (42) und Ablauf (50),
- eine elektronischen Steuereinrichtung (46) zum Steuern der Zudosierung von Wasserkonditionierungsmittel zum zu behandelnden Wasser in Abhängigkeit von dem mit dem Sensor (41) gemessenen Wasserparameters des zu behandelnden Wassers, wobei
a) in einem Speicher (47) der elektronischen Steuereinrichtung (46) wenigstens drei aneinander anschließende Parameterintervalle (21-24; 31-33) möglicher Werte des Wasserparameters des zu behandelnden Wassers programmiert sind,
b) in einem Speicher (47) der elektronischen Steuereinrichtung (46) wenigstens drei Betriebsmodi (25-28; 34-36) programmiert sind, wobei verschiedene Betriebsmodi (25-28; 34-36) verschiedene Zudosierungen von Wasserkonditionierungsmittel zum zu behandelnden Wasser vorsehen,
c) die elektronische Steuereinrichtung (46) dazu ausgebildet ist, eine Messung (5) des Wasserparameters des zu behandelnden Wassers vorzunehmen, eine Zuordnung des gemessenen Werts des Wasserparameters des zu behandelnden Wassers zu einem der Parameterintervalle (21-24; 31-33) vorzunehmen, und eine Zuordnung (6) eines Betriebsmodus (25-28; 34-36) in Abhängigkeit vom zugeordneten Parameterintervall (21-24; 31-33) vorzunehmen, wobei für die wenigstens drei Parameterintervalle (21-24; 31-33) unterschiedliche Zudosierungen von Wasserkonditionierungsmittel vorgesehen sind;
d) die elektronische Steuereinrichtung (46) dazu ausgebildet ist, die Dosieranlage (40) gemäß dem zugeordneten Betriebsmodus, (25-28; 34-36) zu betreiben (7), wobei gemäß der Programmierung des Speichers (47) der elektronischen Steuereinrichtung (46) in wenigstens zwei Betriebsmodi (25-28; 34-38) die Zudosierung einer unterschiedlichen Menge eines identischen Wasserkonditionierursgsmittels je Menge des zu behandelnden Wassers vorgesehen ist, so dass in den wenigstens zwei Betriebsmode (25-28; 34-36) eine unterschiedliche Konzentration des identischen Wasserkonditionierungsmittels im behandelte Wasser erhalten wird.

2. Dosieranlage (40) nach Anspruch 1, **dadurch gekennzeichnet, dass** die elektronischen Steuereinrichtung (46) dazu ausgebildet ist, automatisch Schritt c) regelmäßig zu wiederholen und die Dosieranlage (40) gemäß Schritt d) mit dem jeweils zuletzt zugeordneten Betriebsmodus (25-28; 34-38) zu betreiben (7).

3. Dosieranlage, (40) nach Anspruch 1 oder 2, **dadurch gekennzeichnet, dass** der Sensor (41) als Leitfähigkeitssensor (41a) oder pH-Sensor (41b) oder ionenselektive Elektrode, insbesondere Ca-ionenselektive Elektrode, oder als Temperatursensor (41c) ausgebildet ist, und der Wasserparameter eine Leitfähigkeit (20; LF), ein pH-Wert, ein Ionengehalt, insbesondere Ca-Ionengehalt, oder eine Temperatur (T) des zu behandelnden Wassers ist.

4. Dosieranlage (40) nach einem der vorhergehenden Ansprüche, **dadurch gekennzeichnet, dass** die Dosieranlage (40) einen Durchflussmesser (45) umfasst, insbesondere im Zulauf (42).

5. Dosieranlage (40) nach einem der vorhergehenden Ansprüche, **dadurch gekennzeichnet, dass** die Dosieranlage (40) mehrere Vorratsbehälter (49; 49a-49c) mit unterschiedlichen Wasserkonditionierungsmitteln umfasst.

6. Dosieranlage (40) nach Anspruch 5, **dadurch gekennzeichnet, dass** die Dosieranlage (40) mehrere Vorratsbehälter (49; 49a-49c) mit Mischungen mehrerer chemischer Substanzen zur Wasserbehandlung umfasst, wobei die Mischungsverhältnisse der chemischen Substanzen in den Mischungen unterschiedlich sind, insbesondere wobei für jeden Betriebsmodus (25-28; 34-36) ein eigener Vorratsbehälter (49; 49a-49c) vorgesehen ist

7. Dosieranssge (40) nach einem der vorhergehenden Ansprüche, dadurch gekenntzeichnet, dass gemäß der Programmierung des Speichers (47) der elektronischen Steuereinrichtung (46) innerhalb wenigstens einem der Betriebsmodi (25-28; 34-36) sowohl die Art des oder der Wasserkonditionierungsmittel, als auch die Menge des oder der Wasserkonditionierungsmittel, die je Menge des zu behandelnden Wassers zum Zudosieren vorgesehen sind, konstant sind.

8. Dosieranlage (40) nach einem der vorhergehenden Ansprüche, **dadurch gekennzeichnet, dass** gemäß der Programmierung des Speichers (47) der elektronischen Steuereinrichtung (46) die Art des oder der Wasserkonditionierungsmittel und/oder die Menge des oder der Wasserkonditionierungsmittel, die je Menge des zu behandelnden Wassers zum Zudosieren vorgesehen sind, innerhalb wenigstens einem der Betriebsmodi (25-28; 34-36) zeitlich veränderlich sind.

9. Dasieranlage (40) nach einem der vorhergehenden Ansprüche, **dadurch gekennzeichnet,**
**dass** die Dosieranlage (40) wenigstens einen weiteren Sensor (41) zur Erfassung eines weiteren Wasserparameters im Zulauf umfasst, dass gemäß, a) in einem Speicher (47) der elektronischen Steuereinrichtung (46) auch mehrere, aneinander anschließende, weitere Parameterintervalle möglicher Werte des weiteren Wasserparameters im zu behandelnden Wasser programmiert sind, und dass die elektronische Steuereinrichtung (46) dazu eingerichtet ist, gemäß c) auch den weiteren Wasserparameter des unbehandelten Wassers zu messen, eine Zuordnung des gemessenen Wertes des weiteren Wasserparameters zu einem der weiteren Parameterintervalle vorzunehmen, und die Zuordnung (6) des Betriebsmodus (25-28; 34-36) auch in Abhängigkeit vom zugeordneten, weiteren Parameterintervall vorzunehmen.

10. Dosieranlage (40) nach einem der vorhergehenden Ansprüche, **dadurch gekennzeichnet,**
**dass** die Dosieranlage (40) weiterhin einen Signalgeber (53) umfasst, dass in einem Speicher (47) der elektronischen Steuereinrichtung (46) ein oberer Grenzwert und/oder ein unterer Grenzwert für den gemessenen Wasserparameter des zu behandelnden Wassers abgespeichert ist,
und **dass** die elektronische Steuereinrichtung (46) dazu ausgebildet ist, über den Signalgeber (53) eine Alarmmeldung auszugeben, wenn der gemessene Wert des Wasserparameters des zu behandelnden Wassers den oberen Grenzwert überschreitet und/oder wenn der gemessene Wert des Wasserparameters des zu behandelnden Wassers den unteren Grenzwert unterschreitet.

11. Dosieranlage (40) nach einem der vorhergehenden Ansprüche, **dadurch gekennzeichnet,**
**dass** in einem Speicher (47) der elektronischen Steuereinrichtung (46) ein oberer Grenzwert und/oder ein unterer Grenzwert für den gemessenen Wasserparameter des zu behandelnden Wassers abgespeichert ist,
und **dass** die elektronische Steuereinrichtung (46) dazu ausgebindet ist, in einen vordefinierten Standard-Betriebsmodus zu wechseln, wenn der gemessene Wert des Wasserparameters des zu behandelnden Wassers den oberen Grenzwert überschreitet und/oder wenn der gemessene Wert des Wasserparameters des zu behandelnden Wassers den unteren Grenzwert unterschreitet, insbesondere wobei der Standard-Betriebsmodus einem durchschnittlichen Wert des Wasserparameters des zu behandelnden Wassers aus vorangegangenen Messungen, bei denen der obere Grenzwert nicht Überschritten und der untere Grenzwert nicht unterschritten wurde, entspricht, wobei dieser durchschnittliche Wert des Wasserparameters in einem Speicher (47) der elektronischen Steuereinrichtung (46) gespeichert ist.

12. Verfahren zum Betrieb einer Dosieranlage (40),
wobei mit der Dosieranlage (40) Wasserkonditionierungsmittel in zu behandelndes Wasser, nämlich einen Strom von an einem Zulauf (42) zufließendem, zu behandelndem Wasser, zudosiert wird, so dass ein behandeltes Wasser, nämlich ein Strom von an einem Ablauf (50) abfließendem, behandelten Wasser, erhalten wird, wobei ein Wasserparameter des zu behandelnden Wassers mit einem Sensor (41) ermittelt wird und die Dosieranlage (40) abhängig von dem ermittelten Wert des Wasserparameters mit wenigstens einer Dosierpumpe (48, 48a-b), die aus wenigstens einem Vorratsbehälter (49, 49a-c) Wasserkonditionierungsmittel fördert und von einer elektronischen Steuereinrichtung (46) angesteuert wird, Wasserkonditionierungsmittel dem zu behandelnden Wasser zusetzt, mit folgenden Schritten:
a) Definition (2) von wenigstens drei aneinander anschließenden Parameterintervallen (21-24; 31-33) möglicher Werte des Wasserparameters des zu behandelnden Wassers;
b) Definition (3) von wenigstens drei Betriebsmodi, wobei verschiedene Betriebsmodi verschiedene Zudosierungen von Wasserkonditionierungsmittel zum zu behandeinden Wasser vorsehen;
c) Messung (5) des Wasserparametars des zu behandelnden Wassers, Zuordnung des gemessenen Werts des Wasserparameters des zu behandelnden Wassers zu einem der Parameterintervalle (21-24; 31-33), und Zuordnung eines Betriebsmodus, (25-28; 34-36) in Abhängigkeit vom zugeordneten Parameterintervall (21-24; 31-33), wobei für die wenigstens drei Parameterintervalle (21-24; 31-33) unterschiedliche Zudosierungen von Wasserkonditionierungsmittel vorgesehen sind;
d) Betrieb (7) der Dosieranlage (40) gemäß dem zugeordneten Betriebsmodus, (25-28; 34-36), wobei in wenigstens zwei Betriebsmode (25-28; 34-36) die Zudosierung einer unterschiedlichen Menge eines identischen Wasserkonditionierungsmittels je Menge des zu behandelnden Wasser vorgesehen ist, so dass in den wenigstens zwei Betriebsmodi (25-28; 34-36) eine unterschiedliche Konzentration des identischen Wasserkonditionierungsmitteis im behandelten Wasser erhalten wird.

13. verfahren nach Anspruch 12, **dadurch gekennzeichnet, dass** Schritt c) regelmäßig wiederholt wird und der Betrieb (7) gemäß Schritt d) mit dem jeweils zuletzt zugeordneten Betriebsmodus, (25-28; 34-36) erfolgt.

14. Verfahren nach einem der Ansprüche 12 bis 13, **dadurch gekennzeichnet, dass** in wenigstens einem ersten Betriebsmodus (25-28; 34-36) ein Zudosieren eines ersten Wasserkonditionierungsmittels vorgesehen ist, und in wenigstens einem zweiten Betriebsmodus (25-28; 34-36) ein Zudosieren dieses ersten Wasserkonditionierungsmittels nicht vorgesehen ist.

15. Verfahren nach Anspruch 14, dadurch gekenntzeichnet, dass in dem wenigsten einen, zweiten Betriebsmodus (25-28; 34-36) das Zudosieren eines zweiten Wasserkonditionierungsmittels vorgesehen ist, und in dem wenigstens einen, ersten Betriebsmodus (25-28: 34-36) ein Zudosieren dieses zweiten Wasserkonditionierungsmittels nicht vorgesehen ist.

16. Verfahren nach einem der Ansprüche 12 bis 15, **dadurch gekennzeichnet, dass** in wenigstens einem Betriebsmodus (25-28; 34-36) ein Zudosieren von wenigstens zwei verschiedenen Wasserkonditionierungsmitteln vorgesehen ist.

17. Verfahren nach einem der Ansprüche 12 bis 16, **dadurch gekennzeichnet, dass** innerhalb wenigstens einem der Betriebsmodi (25-28; 34-36) sowohl die Art des oder der Wasserkonditionierungsmittel, als auch die Menge des oder der Wasserkonditionierungsmittel, die je Menge des zu behandelndes Wasser zum Zudosieren vorgesehen sind, konstant sind.

18. Verfahren nach einem der Ansprüche 12 bis 17, **dadurch gekennzeichnet, dass** die Art des oder der Wasserkonditionierungsmittel und/oder die Menge des oder der Wasserkonditionierungsmittel, die je Menge des zu behandelnden Wassers zum Zudosieren vorgesehen sind, innerhalb wenigstens einem der Betriebsmodi (25-28; 34-36) zeitlich veränderlich sind.

19. Verfahren nach einem der Ansprüche 12 bis 18, **dadurch gekennzeichnet, dass** in Schritt a) auch eine Definition von mehreren, aneinander anschließenden, weiteren Parameterintervallen möglicher Werte wenigstens eines weiteren Wasserparameters im zu behandelnden Wasser erfolgt,
und dass in Schritt c) auch der weitere Wasserparameter des unbehandelten Wassers gemessen wird, eine Zuordnung des Werts des gemessenen, weiteren Wasserparameters zu einem der weiteren Parameterintervalle erfolgt, und die Zuordnung (6) des Betriebsmodus (25-28; 34-36) auch in Abhängigkeit vom zugeordneten weiteren Parameterintervall erfolgt.

20. Verfahren nach einem der Ansprüche 12 bis 19, **dadurch gekennzeichnet, dass** eine Alarmmeldung erfolgt, wenn der gemessene Wert des Wasserparameters des zu behandelnden Wassers einen oberen Grenzwert überschreitet und/oder wenn der gemessene Wert des Wasserparameters des zu behandelnden Wassers einen unteren Grenzwert unterschreitet.

21. Verfahren nach einem der Ansprüche 12 bis 20, **dadurch gekennzeichnet, dass** in einen vordefinierten Standard-Betriebsmodus gewechselt wird, wenn der gemessene Wert des Wasserparameters des zu behandelnden Wassers einen oberen Grenzwert überschreitet und/oder wenn der gemessene Wert des Wasserparameters des zu behandelnden Wassers einen unteren Grenzwert unterschreitet,
insbesondere wobei der Standard-Betriebsmodus einem durchschnittlichen Wert des Wasserparameters des zu behandelnden Wassers aus vorangegangenen Messungen, bei denen der obere Grenzwert nicht überschritten und der untere Grenzwert nicht unterschritten wurde, entspricht.

## Claims

1. Metering system (40) comprising
- an inlet (42) for inflowing water to be treated,
- a sensor (41) for detecting a water parameter in the inlet (42),
- an outlet (50) for outflowing treated water,
- at least one storage container (49; 49a-49c) with water conditioning agent,
- at least one metering pump (48; 48a-48b) for metered addition of water conditioning agent from the at least one storage container (49; 49a-49c) to the water to be treated between inlet (42) and outlet (50),
- an electronic control device (46) for controlling the metered addition of water conditioning agent to the water to be treated in dependence on the water parameter, measured by the sensor (41), of the water to be treated, wherein
a) in a storage (47) of the electronic control device (46) at least three consecutive parameter intervals (21-24; 31-33) of possible values of the water parameter of the water to be treated are programmed,
b) in a storage (47) of the electronic control device (46) at least three operating modes (25-28; 34-36) are programmed, wherein different operating modes (25-28; 34-36) provide different metered additions of water conditioning agent to the water to be treated,
c) the electronic control device (46) is designed to perform measurement (5) of the water parameter of the water to be treated, perform an allocation of the measured value of the water parameter of the water to be treated to one of the parameter intervals (21-24; 31-33) and perform an allocation (6) of an operating mode (25-28; 34-36) in dependence on the allocated parameter interval (21-24; 31-33),
wherein different metered additions of water conditioning agent are provided for the at least three parameter intervals (21-24; 31-33);
d) the electronic control device (46) is designed to operate (7) the metering system (40) in accordance with the allocated operating mode (25-28; 34-36), wherein in accordance with the programming of the storage (47) of the electronic control device (46), in at least two operating modes (25-28; 34-36) the metered addition of a different amount of an identical water conditioning agent per amount of water to be treated is provided such that in the at least two operating modes (25-28; 34-36) one obtains a different concentration of the identical water conditioning agent in the treated water.

2. Metering system (40) according to claim 1, **characterized in that** the electronic control device (46) is designed to automatically and regularly repeat step c) and to operate (7) the metering system (40) in accordance with step d) with the respectively last allocated operating mode (25-28; 34-36).

3. Metering system (40) according to claim 1 or 2, **characterized in that** the sensor (41) is designed as conductivity sensor (41a) or pH sensor (41b) or ion-selective electrode, in particular Ca-ion selective electrode, or as temperature sensor (41c), and the water parameter is a conductivity (20; LF), a pH value, an ion content, in particular a Ca-ion content, or a temperature (T) of the water to be treated.

4. Metering system (40) according to any one of the preceding claims, **characterized in that** the metering system (40) comprises a flow meter (45), in particular in the inlet (42).

5. Metering system (40) according to any one of the preceding claims, **characterized in that** the metering system (40) comprises a plurality of storage containers (49; 49a-49c) with different water conditioning agents.

6. Metering system (40) according to claim 5, **characterized in that** the metering system (40) comprises a plurality of storage containers (49; 49a-49c) with mixtures of a plurality of chemical substances for water treatment, wherein the mixing ratios of the chemical substances in the mixtures are different, in particular wherein each operating mode (25-28; 34-36) is provided with its own storage container (49; 49a-49c).

7. Metering system (40) according to any one of the preceding claims, **characterized in that** in accordance with the programming of the storage (47) of the electronic control device (46), within at least one of the operating modes (25-28; 34-36) both the type of the water conditioning agent/s and the amount of the water conditioning agent/s, which are provided for metered addition per amount of water to be treated, are constant.

8. Metering system (40) according to any one of the preceding claims, **characterized in that** in accordance with the programming of the storage (47) of the electronic control device (46), the type of the water conditioning agent/s and/or the amount of the water conditioning agent/s, which are provided for metered addition per amount of water to be treated, vary with time within at least one of the operating modes (25-28; 34-36).

9. Metering system (40) according to any one of the preceding claims, **characterized in that** the metering system (40) comprises at least one further sensor (41) for detecting a further water parameter in the inlet,
that in accordance with a) in a storage (47) of the electronic control device (46) there are also programmed a plurality of consecutive further parameter intervals of possible values of the further water parameter in the water to be treated,
and that the electronic control device (46) is designed, in accordance with c), to also measure the further water parameter of the untreated water, to perform allocation of the measured value of the further water parameter to one of the further parameter intervals, and to perform allocation (6) of the operating mode (25-28; 34-36) also in dependence on the allocated further parameter interval.

10. Metering system (40) according to any one of the preceding claims, **characterized in that** the metering system (40) furthermore comprises a signal generator (53),
that in a storage (47) of the electronic control device (46) an upper limit value and/or a lower limit value is/are stored for the measured water parameter of the water to be treated,
and that the electronic control device (46) is designed to issue an alarm message via the signal generator (53) when the measured value of the water parameter of the water to be treated exceeds the upper limit value and/or when the measured value of the water parameter of the water to be treated falls below the lower limit value.

11. Metering system (40) according to any one of the preceding claims, **characterized in that**
in a storage (47) of the electronic control device (46) an upper limit
value and/or a lower limit value is/are stored for the measured water parameter of the water to be treated,
and that the electronic control device (46) is designed to change to a predefined standard operating mode when the measured value of the water parameter of the water to be treated exceeds the upper limit value and/or when the measured value of the water parameter of the water to be treated falls below the lower limit value, in particular wherein the standard operating mode corresponds to an average value of the water parameter of the water to be treated from previous measurements in which the upper limit value was not exceeded and the lower limit value was not fallen below, wherein this average value of the water parameter is stored in a storage (47) of the electronic control device (46).

12. Method for operating a metering system (40), wherein by means of the metering system (40) water conditioning agent is added in a metered manner to water to be treated, namely a flow of water to be treated flowing in at an inlet (42), such that treated water, namely a flow of treated water that flows out at an outlet (50), is obtained, wherein a water parameter of the water to be treated is determined by means of a sensor (41) and the metering system (40) adds water conditioning agent to the water to be treated in dependence on the detected value of the water parameter using at least one metering pump (48, 48a-b) which extracts water conditioning agent from at least one supply container (49, 49a-c) and is driven by an electronic control device (46), comprising the following steps:
a) defining (2) at least three consecutive parameter intervals (21-24; 31-33) of possible values of the water parameter of the water to be treated;
b) defining (3) at least three operating modes, wherein different operating modes provide different metered additions of water conditioning agent to the water to be treated;
c) measuring (5) the water parameter of the water to be treated, allocating the measured value of the water parameter of the water to be treated to one of the parameter intervals (21-24; 31-33) and allocating an operating mode (25-28; 34-36) in dependence on the allocated parameter interval (21-24; 31-33), wherein different metered additions of water conditioning agent are provided for the at least three parameter intervals (21-24; 31-33);
d) operating (7) the metering system (40) according to the allocated operating mode (25-28; 34-36), wherein in at least two operating modes (25-28; 34-36) the metered addition of a different amount of an identical water conditioning agent per amount of water to be treated is provided such that in the at least two operating modes (25-28; 34-36) one obtains a different concentration of the identical water conditioning agent in the treated water.

13. Method according to claim 12, **characterized in that** step c) is regularly repeated and the operation (7) in accordance with step d) is performed with the respectively last allocated operating mode (25-28; 34-36).

14. Method according to any one of the claims 12 to 13, **characterized in that** in at least one first operating mode (25-28; 34-36) metered addition of a first water conditioning agent is provided and in at least one second operating mode (25-28; 34-36) metered addition of this first water conditioning agent is not provided.

15. Method according to claim 14, **characterized in that** in the at least one second operating mode (25-28; 34-36) the metered addition of a second water conditioning agent is provided and in the at least one first operating mode (25-28; 34-36) metered addition of this second water conditioning agent is not provided.

16. Method according to any one of the claims 12 to 15, **characterized in that** in at least one operating mode (25-28; 34-36) metered addition of at least two different water conditioning agents is provided.

17. Method according to any one of the claims 12 to 16, **characterized in that** within at least one of the operating modes (25-28; 34-36) both the type of water conditioning agent/s and the amount of the water conditioning agent/s, which are provided for metered addition per amount of water to be treated, are constant.

18. Method according to any one of the claims 12 to 17, **characterized in that** the type of water conditioning agent/s and/or the amount of water conditioning agent/s, which are provided for metered addition per amount of the water to be treated, varies/vary with time within at least one of the operating modes (25-28; 34-36).

19. Method according to any one of the claims 12 to 18, **characterized in that** step a) also includes defining a plurality of consecutive further parameter intervals of possible values of at least one further water parameter in the water to be treated, and that in step c) the further water parameter of the untreated water is also measured, the value of the measured further water parameter is allocated to one of the further parameter intervals and the operating mode (25-28; 34-36) is allocated (6) also in dependence on the allocated further parameter interval.

20. Method according to any one of the claims 12 to 19, **characterized in that** an alarm message is issued when the measured value of the water parameter of the water to be treated exceeds an upper limit value and/or when the measured value of the water parameter of the water to be treated falls below a lower limit value.

21. Method according to any one of the claims 12 to 20, **characterized in that** a change to a predefined standard operating mode is performed when the measured value of the water parameter of the water to be treated exceeds an upper limit value and/or when the measured value of the water parameter of the water to be treated falls below a lower limit value,
in particular, wherein the standard operating mode corresponds to an average value of the water parameter of the water to be treated from previous measurements in which the upper limit value was not exceeded and the lower limit value was not fallen below.

## Revendications

1. Installation de dosage (40), comprenant
- une arrivée (42) pour l'eau entrante à traiter,
- un capteur (41) pour détecter un paramètre d'eau dans l'arrivée (42),
- un écoulement (50) pour l'eau sortante traitée,
- au moins un réservoir de stockage (49 ; 49a-49c) contenant un agent de conditionnement d'eau,
- au moins une pompe de dosage (48 ; 48a-48b) pour l'ajout dosé d'agent de conditionnement d'eau à partir dudit au moins un réservoir de stockage (49 ; 49a-49c) à l'eau à traiter entre l'arrivée (42) et l'écoulement (50),
- un dispositif de commande électronique (46) pour commander l'ajout dosé d'agent de conditionnement d'eau à l'eau à traiter en fonction du paramètre d'eau de l'eau à traiter mesuré avec le capteur (41),
a) au moins trois intervalles de paramètre contigus (21-24 ; 31-33) de valeurs possibles du paramètre d'eau de l'eau à traiter étant programmés dans une mémoire (47) du dispositif de commande électronique (46),
b) au moins trois modes de fonctionnement (25-28 ; 34-36) étant programmés dans une mémoire (47) du dispositif de commande électronique (46), différents modes de fonctionnement (25-28 ; 34-36) prévoyant différents ajouts dosés d'agent de conditionnement d'eau à l'eau à traiter,
c) le dispositif de commande électronique (46) étant réalisé pour effectuer une mesure (5) du paramètre d'eau de l'eau à traiter, effectuer une affectation de la valeur mesurée du paramètre d'eau de l'eau à traiter à un des intervalles de paramètre (21-24 ; 31-33) et à effectuer une affectation (6) d'un mode de fonctionnement (25-28 ; 34-36) en fonction de l'intervalle de paramètre (21-24 ; 31-33) affecté, des ajouts dosés différents d'agent de conditionnement d'eau étant prévus pour lesdits au moins trois intervalles de paramètre (21-24 ; 31-33) ;
d) le dispositif de commande électronique (46) étant réalisé pour faire fonctionner (7) l'installation de dosage (40) selon le mode de fonctionnement (25-28 ; 34-36) affecté, sachant que, selon la programmation de la mémoire (47) du dispositif de commande électronique (46), dans au moins deux modes de fonctionnement (25-28 ; 34-36), l'ajout dosé d'une quantité différente d'un agent de conditionnement d'eau identique par quantité d'eau à traiter est prévu, de sorte que dans lesdits au moins deux modes de fonctionnement (25-28 ; 34-36), une concentration différente de l'agent de conditionnement d'eau identique est obtenue dans l'eau traitée.

2. Installation de dosage (40) selon la revendication 1, **caractérisée en ce que** le dispositif de commande électronique (46) est réalisé pour répéter régulièrement l'étape c) automatiquement et pour faire fonctionner (7) l'installation de dosage (40) selon l'étape d) chaque fois avec le dernier mode de fonctionnement (25-28 ; 34-36) affecté.

3. Installation de dosage (40) selon la revendication 1 ou 2, **caractérisée en ce que** le capteur (41) est réalisé sous la forme d'un capteur de conductivité (41a) ou d'un capteur de pH (41b) ou d'une électrode sélective d'ions, en particulier une électrode sélective d'ions Ca, ou sous la forme d'un capteur de température (41c), et le paramètre d'eau est une conductivité (20 ; LF), une valeur de pH, une teneur en ions, en particulier une teneur en ions Ca, ou une température (T) de l'eau à traiter.

4. Installation de dosage (40) selon l'une des revendications précédentes, **caractérisée en ce que** l'installation de dosage (40) comprend un débitmètre (45), en particulier dans l'arrivée (42).

5. Installation de dosage (40) selon l'une des revendications précédentes, **caractérisée en ce que** l'installation de dosage (40) comprend plusieurs réservoirs de stockage (49 ; 49a-49c) contenant différents agents de conditionnement d'eau.

6. Installation de dosage (40) selon la revendication 5, **caractérisée en ce que** l'installation de dosage (40) comprend plusieurs réservoirs de stockage (49 ; 49a-49c) contenant des mélanges de plusieurs substances chimiques pour le traitement de l'eau, les rapports de mélange des substances chimiques dans les mélanges étant différents, en particulier un réservoir de stockage (49 ; 49a-49c) distinct étant prévu pour chaque mode de fonctionnement (25-28 ; 34-36).

7. Installation de dosage (40) selon l'une des revendications précédentes, **caractérisée en ce que** selon la programmation de la mémoire (47) du dispositif de commande électronique (46), dans au moins un des modes de fonctionnement (25-28; 34-36), aussi bien la nature du ou des agent(s) de conditionnement d'eau que la quantité du ou des agent(s) de conditionnement d'eau qui sont prévus pour l'ajout dosé par quantité d'eau à traiter sont constantes.

8. Installation de dosage (40) selon l'une des revendications précédentes, **caractérisée en ce que** selon la programmation de la mémoire (47) du dispositif de commande électronique (46), la nature du ou des agent(s) de conditionnement d'eau et/ou la quantité du ou des agent(s) de conditionnement d'eau qui sont prévus pour l'ajout dosé par quantité d'eau à traiter sont variables dans le temps dans au moins un des modes de fonctionnement (25-28 ; 34-36).

9. Installation de dosage (40) selon l'une des revendications précédentes, **caractérisée en ce**
**que** l'installation de dosage (40) comprend au moins un autre capteur (41) pour détecter un autre paramètre d'eau dans l'arrivée,
**que** selon a) plusieurs autres intervalles de paramètre contigus de valeurs possibles de l'autre paramètre d'eau dans l'eau à traiter sont aussi programmés dans une mémoire (47) du dispositif de commande électronique (46),
et **que** le dispositif de commande électronique (46) est réalisé pour, selon c), mesurer aussi l'autre paramètre d'eau de l'eau non traitée, effectuer une affectation de la valeur mesurée de l'autre paramètre d'eau à un des autres intervalles de paramètre et effectuer aussi l'affectation (6) du mode de fonctionnement (25-28 ; 34-36) en fonction de l'autre intervalle de paramètre affecté.

10. Installation de dosage (40) selon l'une des revendications précédentes, **caractérisée en ce**
**que** l'installation de dosage (40) comprend en outre un émetteur de signaux (53), qu'une valeur limite supérieure et/ou une valeur limite inférieure pour le paramètre d'eau mesuré de l'eau à traiter est stockée dans une mémoire (47) du dispositif de commande électronique (46),
et **que** le dispositif de commande électronique (46) est réalisé pour émettre un message d'alarme par l'intermédiaire de l'émetteur de signaux (53) lorsque la valeur mesurée du paramètre d'eau de l'eau à traiter dépasse la valeur limite supérieure et/ou lorsque la valeur mesurée du paramètre d'eau de l'eau à traiter devient inférieure à la valeur limite inférieure.

11. Installation de dosage (40) selon l'une des revendications précédentes, **caractérisée en ce**
**qu'**une valeur limite supérieure et/ou une valeur limite inférieure pour le paramètre d'eau mesuré de l'eau à traiter est stockée dans une mémoire (47) du dispositif de commande électronique (46),
et **que** le dispositif de commande électronique (46) est réalisé pour passer dans un mode de fonctionnement standard prédéfini lorsque la valeur mesurée du paramètre d'eau de l'eau à traiter dépasse la valeur limite supérieure et/ou lorsque la valeur mesurée du paramètre d'eau de l'eau à traiter devient inférieure à la valeur limite inférieure, en particulier le mode de fonctionnement standard correspondant à une valeur moyenne du paramètre d'eau de l'eau à traiter provenant de mesures précédentes, lors desquelles la valeur limite supérieure n'a pas été dépassée et la valeur limite inférieure pas été soupassée, cette valeur moyenne du paramètre d'eau étant stockée dans une mémoire (47) du dispositif de commande électronique (46).

12. Procédé de fonctionnement d'une installation de dosage (40),
laquelle installation de dosage (40) permet l'ajout dosé d'un agent de conditionnement d'eau à de l'eau à traiter, en particulier à un courant d'eau à traiter entrant à une arrivée (42), de manière à obtenir une eau traitée, à savoir un courant d'eau traitée sortant d'un écoulement (50), un paramètre d'eau de l'eau à traiter étant déterminé avec un capteur (41) et l'installation de dosage (40) ajoutant, en fonction de la valeur déterminée du paramètre d'eau, avec au moins une pompe de dosage (48, 48a-b) qui transporte un agent de conditionnement d'eau à partir d'au moins un réservoir de stockage (49, 49a-c) et est commandée par un dispositif de commande électronique (46), un agent de conditionnement d'eau à l'eau à traiter, lequel procédé comprend les étapes suivantes :
a) définition (2) d'au moins trois intervalles de paramètre (21-24 ; 31-33) de valeurs possibles du paramètre d'eau de l'eau à traiter ;
b) définition (3) d'au moins trois modes de fonctionnement, différents modes de fonctionnement prévoyant différents ajouts dosés d'agent de conditionnement d'eau à l'eau à traiter ;
c) mesure (5) du paramètre d'eau de l'eau à traiter, affectation de la valeur mesurée du paramètre d'eau de l'eau à traiter à un des intervalles de paramètre (21-24 ; 31-33) et affectation d'un mode de fonctionnement (25-28 ; 34-36) en fonction de l'intervalle de paramètre (21-24 ; 31-33) affecté, des ajouts dosés différents d'agent de conditionnement d'eau étant prévus pour lesdits au moins trois intervalles de paramètre (21-24 ; 31-33) ;
d) fonctionnement (7) de l'installation de dosage (40) selon le mode de fonctionnement (25-28 ; 34-36) affecté, sachant que dans au moins deux modes de fonctionnement (25-28 ; 34-36), l'ajout dosé d'une quantité différente d'un agent de conditionnement d'eau identique par quantité d'eau à traiter est prévu, de sorte que dans lesdits au moins deux modes de fonctionnement (25-28 ; 34-36), une concentration différente de l'agent de conditionnement d'eau identique est obtenue dans l'eau traitée.

13. Procédé selon la revendication 12, **caractérisé en ce que** l'étape c) est répétée régulièrement et le fonctionnement (7) s'effectue selon l'étape d) avec chaque fois le dernier mode de fonctionnement (25-28 ; 34-36) affecté.

14. Procédé selon l'une des revendications 12 à 13, **caractérisé en ce que** dans au moins un premier mode de fonctionnement (25-28 ; 34-36), un ajout dosé d'un premier agent de conditionnement d'eau est prévu et, dans au moins un deuxième mode de fonctionnement (25-28 ; 34-36), un ajout dosé de ce premier agent de conditionnement d'eau n'est pas prévu.

15. Procédé selon la revendication 14, **caractérisé en ce que** dans ledit au moins un deuxième mode de fonctionnement (25-28 ; 34-36), l'ajout dosé d'un deuxième agent de conditionnement d'eau est prévu et, dans ledit au moins un premier mode de fonctionnement (25-28 ; 34-36), un ajout dosé de ce deuxième agent de conditionnement d'eau n'est pas prévu.

16. Procédé selon l'une des revendications 12 à 15, **caractérisé en ce que** dans au moins un mode de fonctionnement (25-28 ; 34-36), un ajout dosé d'au moins deux agents de conditionnement d'eau différents est prévu.

17. Procédé selon l'une des revendications 12 à 16, **caractérisé en ce que** dans au moins un des modes de fonctionnement (25-28 ; 34-36), aussi bien la nature du ou des agent(s) de conditionnement d'eau que la quantité du ou des agent(s) de conditionnement d'eau qui sont prévus pour l'ajout dosé par quantité d'eau à traiter sont constantes.

18. Procédé selon l'une des revendications 12 à 17, **caractérisé en ce que** la nature du ou des agent(s) de conditionnement d'eau et/ou la quantité du ou des agent(s) de conditionnement d'eau qui sont prévus pour l'ajout dosé par quantité d'eau à traiter sont variables dans le temps dans au moins un des modes de fonctionnement (25-28 ; 34-36).

19. Procédé selon l'une des revendications 12 à 18, **caractérisé en ce**
**qu'**à l'étape a) est effectuée aussi une définition de plusieurs autres intervalles de paramètre contigus de valeurs possibles d'au moins un autre paramètre d'eau dans l'eau à traiter,
et **qu'**à l'étape c) l'autre paramètre d'eau de l'eau non traitée est aussi mesuré, une affectation de la valeur de l'autre paramètre d'eau mesuré à un des autres intervalles de paramètre est effectuée et l'affectation (6) du mode de fonctionnement (25-28 ; 34-36) est effectuée aussi en fonction de l'autre intervalle de paramètre affecté.

20. Procédé selon l'une des revendications 12 à 19, **caractérisé en ce qu'**un message d'alarme est émis lorsque la valeur mesurée du paramètre d'eau de l'eau à traiter dépasse une valeur limite supérieure et/ou lorsque la valeur mesurée du paramètre d'eau de l'eau à traiter devient inférieure à une valeur limite inférieure.

21. Procédé selon l'une des revendications 12 à 20, **caractérisé en ce qu'**il se produit un passage dans un mode de fonctionnement standard prédéfini lorsque la valeur mesurée du paramètre d'eau de l'eau à traiter dépasse une valeur limite supérieure et/ou lorsque la valeur mesurée du paramètre d'eau de l'eau à traiter devient inférieure à une valeur limite inférieure, en particulier le mode de fonctionnement standard correspondant à une valeur moyenne du paramètre d'eau de l'eau à traiter provenant de mesures précédentes, lors desquelles la valeur limite supérieure n'a pas été dépassée et la valeur limite inférieure pas été dépassée vers le bas.
